# EUROPEAN PATENT SPECIFICATION

(11) **EP 3 098 197 B1**
(45) Date of publication and mention of the grant of the patent: **01.05.2019**
(21) Application number: 15169417.1
(22) Date of filing: 27.05.2015
(51) Int. Cl.: C01B 3/38, C01B 3/56

(54) **PROCESS FOR THE PRODUCTION OF HYDROGEN**
VERFAHREN ZUR HERSTELLUNG VON WASSERSTOFF
PROCÉDÉ DE PRODUCTION D'HYDROGÈNE

(43) Date of publication of application: 30.11.2016
(73) Proprietor: AIR PRODUCTS AND CHEMICALS, INC., Allentown, PA 18195-1501 (US)
(72) Inventor: Sicinski, Michael Andrew, Orefield, Pennsylvania 18069 (US); Wood, Christopher H., Schnecksville, Pennsylvania 18078 (US); Hoke, Jr., Bryan Clair, Bethlehem, Pennsylvania 18020 (US)
(74) Representative: SSM Sandmair

(56) References cited:
- US-A1- 2007 212 293
- US-B2- 8 790 618

## Description

### BACKGROUND

The present invention relates to a process for the production of a H₂-containing product in a hydrogen production facility comprising a catalytic steam-hydrocarbon reformer and a pressure swing adsorption unit. More specifically the present process addresses the need to reduce the time to startup the hydrogen production facility after a maintenance event, and reduce the consumption of feedstock and fuel consumed during the startup mode after a maintenance event.

Related disclosures include U.S. Pat. No. 8,790,618 and U.S. Pat. Appl. Pub. No. 2007/0212293 (U.S. Pat. No. 7,670,587).

U.S. 8,790,618 discloses a method for starting up a hydrogen-generation assembly that includes a hydrogen-producing region (HPR) and a pressure swing adsorption (PSA) assembly. The hydrogen-producing region has a HPR hydrogen-producing, HPR shutdown, HPR dormant, and HPR startup states. The PSA assembly has a PSA hydrogen-purifying, PSA shutdown, PSA dormant, and PSA startup states. The U.S. 8,790,618 invention requires that the PSA startup sequence includes utilizing the PSA startup sequence at least partially concurrently with the HPR startup sequence where the PSA startup sequence begins after initiating and before completing the HPR startup sequence to transition the HPR from the HPR dormant state to the HPR hydrogen-producing state.

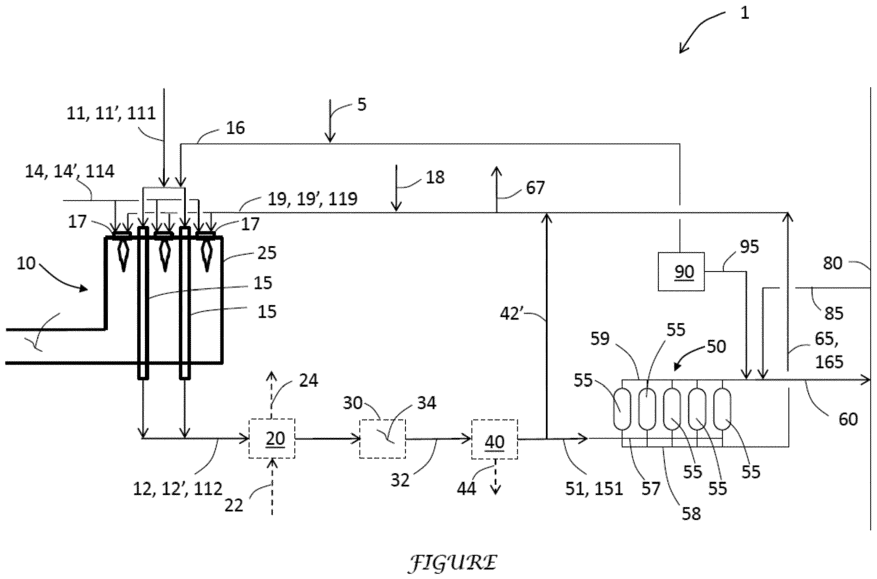

U.S. 2007/0212293 discloses a startup procedure for hydrocarbon fuel reformers. The system comprises a hydrogen generation system primarily consisting of a reformer unit 2, a hydrogen purification unit 3, which can be a pressure swing adsorption unit, and a hydrogen storage unit 4. FIG. 2 illustrates the startup procedure where gases flow through the reformer 2 and pass to the H₂ purification unit 3 (step 103) and the H₂ purification unit 3 is operated such that all gas flows to the combustor 15 (step 104). Various steps are taken during startup of the reformer unit 2 and the pressure swing adsorption unit 3 until the product purity and pressure from the H₂ purification unit 3 is established in step 115. Then the reformer unit and the hydrogen purification unit are started up concurrently in U.S. 2007/0212293.

Industry desires to startup the catalytic steam-hydrocarbon reformer and pressure swing adsorption unit quickly and safely.

Industry desires to startup the catalytic steam-hydrocarbon reformer and pressure swing adsorption unit while reducing the amount of unproductive feedstock and fuel consumed during the startup phase.

### BRIEF SUMMARY

There are several aspects of the invention as outlined below. In the following, specific aspects of the invention are outlined below. The reference numbers and expressions set in parentheses are referring to an example embodiment explained further below with reference to the figure. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.

The present invention relates to a process for the production of a H₂-containing product (60) in a hydrogen production facility (1) comprising a catalytic steam-hydrocarbon reformer (10) and a pressure swing adsorption unit (50), the catalytic steam-hydrocarbon reformer (10) comprising a plurality of catalyst-containing reformer tubes (15) in a reformer furnace (25) and the pressure swing adsorption unit (50) comprising a plurality of adsorption beds (55).
Aspect 1. A process comprising:
   a catalytic steam-hydrocarbon reformer production state wherein a reformer feed gas mixture (11) is introduced into the plurality of catalyst-containing reformer tubes (15), the reformer feed gas mixture (11) is reacted in a reforming reaction under reaction conditions effective to form a reformate (12) comprising H₂, CO, CH₄, and H₂O, and the reformate (12) is withdrawn from the plurality of catalyst-containing reformer tubes (15), and a fuel (19) is combusted with an oxidant gas (14) in the reformer furnace (25) external to the plurality of catalyst-containing tubes (15) wherein the fuel (19) comprises at least a portion of a by-product gas (65) from the pressure swing adsorption unit (50);
   a pressure swing adsorption unit production state wherein the pressure swing adsorption unit (50) separates a pressure swing adsorption unit feed gas (51) formed from at least a portion of the reformate (12) withdrawn from the plurality of catalyst-containing reformer tubes (15) of the catalytic steam-hydrocarbon reformer (10) undergoing the catalytic steam-hydrocarbon reformer production state to produce the H₂-containing product (60) and the by-product gas (65), wherein each of the plurality of adsorption beds (55) are subjected to a repetitive cycle of steps, the repetitive cycle of steps comprising a production step, a depressurizing equalization step, a blowdown step, a pressurizing equalization step, and a pressurization step;
   a catalytic steam-hydrocarbon reformer shutdown mode comprising discontinuing introduction of the reformer feed gas mixture (11) into the plurality of catalyst-containing tubes (15) and discontinuing combustion of the fuel (19) with the oxidant gas (14), wherein the catalytic steam-hydrocarbon reformer shutdown mode is subsequent to the catalytic steam-hydrocarbon reformer production state;
   a pressure swing adsorption unit shutdown mode comprising discontinuing introduction of the pressure swing adsorption unit feed gas (51) into the plurality of adsorption beds (55) due to the catalytic steam-hydrocarbon reformer (10) entering the catalytic steam-hydrocarbon reformer shutdown mode, and subsequently purging the plurality of adsorption beds (55) with N₂ (95) to provide a N₂ concentration in each of the plurality of adsorption beds (55) greater than 96 volume % N₂, or greater than 99.6 volume % N₂, or greater than 99.96 volume % N₂, wherein the pressure swing adsorption unit shutdown mode occurs after the pressure swing adsorption unit production state;
   a pressure swing adsorption unit maintenance state wherein the repetitive cycle of steps is halted and where air is introduced into the plurality of adsorption beds (55) and at least a portion of the N₂ in the plurality of adsorption beds (55) that was introduced during the pressure swing adsorption shutdown mode escapes the plurality of adsorption beds (55);
   a pressure swing adsorption unit startup mode comprising purging the plurality of adsorption beds (55) with N₂ (95) to decrease the concentration of O₂ in each of the plurality of adsorption beds (55) to less than 1.3 volume % O₂, or less than 0.5 volume % O₂, subsequently purging the plurality of adsorption beds with H₂ (85) to provide a H₂ concentration in each of the plurality of adsorption beds (55) greater than 85 volume % H₂ or greater than 95 volume % H₂ or greater than 99 volume % H₂, and adjusting a pressure of the H₂ inside each of the plurality of adsorption beds (55) to within a respective defined target pressure range for each of the plurality of adsorption beds (55), the respective defined target pressure range defined by the step each adsorption bed will undergo first upon restarting the repetitive cycle of steps, wherein the pressure swing adsorption unit startup mode is subsequent to the pressure swing adsorption unit maintenance state; and
   a catalytic steam-hydrocarbon reformer startup mode comprising introducing a startup-mode reformer feed gas mixture (11') into the plurality of catalyst-containing reformer tubes (15), reacting the startup-mode reformer feed gas mixture under reaction conditions effective to form a startup-quality reformate (12') comprising H₂, CO, CH₄, and H₂O, and withdrawing the startup-quality reformate (12') from the plurality of catalyst-containing reformer tubes (15), and combusting a startup-mode fuel (19') with a startup-mode oxidant gas (14') in the reformer furnace (25) external to the plurality of catalyst-containing tubes (15);
   wherein at least a portion of the pressure swing adsorption startup mode is concurrent with at least a portion of the catalytic steam-hydrocarbon reformer startup mode.
Aspect 2. The process of aspect 1 wherein during the pressure swing adsorption unit startup mode, the plurality of adsorption beds (55) are purged with H₂ independent of any of the plurality of adsorption beds (85) undergoing any step of the repetitive cycle of steps.
Aspect 3. The process of aspect 1 or aspect 2 wherein during the pressure swing adsorption unit startup mode, the pressure of the H₂ inside each of the plurality of adsorption beds (55) is adjusted to within the respective defined target pressure range for each of the plurality of adsorption beds (55) independent of any of the plurality of adsorption beds (85) under going any step of the repetitive cycle of steps.
Aspect 4. The process of any one of the preceding aspects wherein during the pressure swing adsorption unit startup mode, the repetitive cycle of steps is still halted.
Aspect 5. The process of any one of the preceding aspects wherein during the pressure swing adsorption unit startup mode, the plurality of adsorption beds (55) are purged with H₂ (85) prior to undergoing any step of the repetitive cycle of steps.
Aspect 6. The process of any one of the preceding aspects during the pressure swing adsorption unit startup mode, the pressure of the H₂ inside each of the plurality of adsorption beds (55) is adjusted prior to undergoing any step of the repetitive cycle of steps.
Aspect 7. The process of any one of the preceding aspects further comprising restarting the repetitive cycle of steps subsequent to completing the pressure swing adsorption unit startup mode (i.e. after the pressure of the H₂ inside each of the plurality of adsorption beds (55) has been adjusted to within the respective defined target pressure range for each of the plurality of adsorption beds (55)).
Aspect 8. The process of any one of the preceding aspects wherein during the pressure swing adsorption unit shutdown mode, the plurality of adsorption beds are purged with N₂ by sweep purging and/or pressurized purging.
Aspect 9. The process of any one of the preceding aspects wherein during the pressure swing adsorption unit startup mode, the plurality of adsorption beds are purged with N₂ by sweep purging and/or pressurized purging.
Aspect 10. The process of any one of the preceding aspects wherein during the pressure swing adsorption unit startup mode, the plurality of adsorption beds are purged with H₂ by sweep purging and/or pressurized purging.
Aspect 11. The process of any one of the preceding aspects wherein during the pressure swing adsorption unit startup mode, the one or more pipe headers are purged with N₂ by sweep purging and/or pressurized purging.
Aspect 12. The process of any one of the preceding aspects wherein during the pressure swing adsorption unit startup mode, the one or more pipe headers are purged with H₂ by sweep purging and/or pressurized purging.
Aspect 13. The process of any one of the preceding aspects wherein the pressure swing adsorption unit startup mode is initiated prior to initiating the catalytic steam-hydrocarbon reformer startup mode.
Aspect 14. The process of any one of the preceding aspects wherein no portion of the startup-quality reformate (12') is introduced into any of the plurality of adsorption beds (55).
Aspect 15. The process of any one of the preceding aspects wherein the startup-mode fuel (19') comprises no by-product gas (65) from the pressure swing adsorption unit (55).
Aspect 16. The process of any one of the preceding aspects wherein the H₂ for purging the plurality of adsorption beds during the startup mode is provided from a H₂ pipeline.
Aspect 17. The process of any one of the preceding aspects wherein the startup-quality reformate (12') is at least one of vented (67), flared, or used to form at least a portion of the startup-mode fuel (19').
Aspect 18. The process of any one of the preceding aspects wherein the catalytic steam-hydrocarbon reformer startup mode comprises introducing a N₂- and steam-containing stream (16) during heat-up of the plurality of catalyst-containing reformer tubes (15) prior to introducing the startup-mode reformer feed gas mixture (11') into the plurality of catalyst-containing reformer tubes (15).
Aspect 19. The process of any one of the preceding aspects wherein after discontinuing introduction of the reformer feed gas mixture (11) into the plurality of catalyst-containing tubes (15) in the catalytic steam-hydrocarbon reformer shutdown mode, the catalytic steam-hydrocarbon reformer shutdown mode comprises purging the plurality of catalyst-containing reformer tubes (15) with N₂ and/or steam to decrease the total concentration of combustible gases to less than 1 volume %.
Aspect 20. The process of any one of the preceding aspects wherein at least one of the plurality of adsorption beds (55) commences the production step upon restarting, at least one of the plurality of adsorption beds (55) commences the depressurizing equalization step upon restarting, at least one of the plurality of adsorption beds (55) commences the blowdown step upon restarting, at least one of the plurality of adsorption beds (55) commences the pressurizing equalization step upon restarting, and at least one of the plurality of adsorption beds (55) commences the pressurization step upon restarting.
Aspect 21. The process of any one of the preceding aspects further comprising:
   a second catalytic steam-hydrocarbon reformer production state wherein a second state reformer feed gas mixture (111) is introduced into the plurality of catalyst-containing reformer tubes (15), the second state reformer feed gas mixture (111) is reacted under reaction conditions effective to form a second state reformate (112) comprising H₂, CO, CH₄, and H₂O, and the second state reformate (112) is withdrawn from the plurality of catalyst-containing reformer tubes (15), and a second state fuel (119) is combusted with a second state oxidant gas (114) in the reformer furnace (25) external to the plurality of catalyst-containing tubes (15) wherein the second state fuel (119) comprises a second state by-product gas (165) from the pressure swing adsorption unit (50); and
   a second pressure swing adsorption unit production state wherein the pressure swing adsorption unit (50) separates a second state pressure swing adsorption unit feed gas (151) formed from at least a portion of the second state reformate (112) withdrawn from the plurality of catalyst-containing reformer tubes (15) of the catalytic steam-hydrocarbon reformer (10) undergoing the second catalytic steam-hydrocarbon reformer production state to produce the H₂-containing product (60) and the second state by-product gas (165).
Aspect 22. The process of any one of the preceding aspects wherein the pressure swing adsorption unit startup mode further comprises purging one or more pipe headers (57, 58, 59) operatively connected to the plurality of adsorption beds (55) with N₂ (95) to decrease the concentration of O₂ in the one or more pipe headers (57, 58, 59) to less than 1.3 volume % O₂, or less than 0.5 volume % O₂, or less than 1000 ppmv O₂, subsequently purging the one or more pipe headers (57, 58, 59) with H₂ (85) to provide a H₂ concentration in each of the one or more pipe headers greater than 85 volume % H₂, or greater than 99 volume % H₂, and adjusting a pressure of the H₂ inside each of the one or more pipe headers to within a respective defined target pressure range for each of the one or more pipe headers (57, 58, 59).
Aspect 23. The process of any one of the preceding aspects further comprising a catalytic steam-hydrocarbon reformer maintenance state wherein air is introduced into the plurality of catalyst-containing reformer tubes and at least a portion of the N₂ in the plurality of catalyst-containing reformer tubes that was introduced during the catalytic steam-hydrocarbon reformer shutdown mode escapes the plurality of catalyst-containing reformer tubes.
Aspect 24. The process of any one of the preceding aspects wherein during the pressure swing adsorption unit startup mode, the pressure of the H₂ inside one of the plurality of adsorption beds (55) is adjusted independently from the pressure of the H₂ inside another one of the plurality of adsorption beds (55).

### BRIEF DESCRIPTION OF SEVERAL VIEWS OF THE DRAWINGS

The sole figure is a process flow diagram for the process for producing a H₂-containing gas.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein a "divided portion" of a stream is a portion having the same chemical composition and species concentrations as the stream from which it was taken.

As used herein a "separated portion" of a stream is a portion having a different chemical composition and different species concentrations than the stream from which it was taken.

As used herein, "first," "second," "third," etc. are used to distinguish from among a plurality of steps and/or features, and is not indicative of the total number, or relative position in time and/or space unless expressly stated as such.

As used herein, pressure units are absolute pressure units unless expressly stated to be gauge pressure units.

Referring now to the drawing, the FIGURE shows a process flow diagram for a process for the production of a H₂-containing product 60.

The present invention relates to a process for the production of a H₂-containing product 60 in a hydrogen production facility 1. The hydrogen production facility comprises a catalytic steam-hydrocarbon reformer 10. The catalytic steam-hydrocarbon reformer comprises a plurality of catalyst-containing reformer tubes 15 in a reformer furnace 25. The reformer furnace comprises a radiant section and a convection section. The plurality of catalyst-containing reformer tubes is contained in the radiant section and various heat exchangers to recover heat from the combustion product gases are contained in the convection section of the reformer furnace.

Catalytic steam reforming, also called steam methane reforming (SMR) or steam reforming, is defined as any process used to convert reformer feedstock to synthesis gas by reaction with steam over a catalyst. Synthesis gas, commonly called syngas, is any mixture comprising hydrogen and carbon monoxide. The reforming reaction is an endothermic reaction and may be described generally as CₙHₘ + n H₂O → n CO + (m/2 + n) H₂. Hydrogen is generated when synthesis gas is generated.

A production facility for generating hydrogen and/or synthesis gas is a reformer and associated equipment for the production of hydrogen and/or synthesis gas. Associated equipment may include, for example, adiabatic prereformers, convective prereformers, heat exchangers, pumps, fans, water-gas shift reactors, pressure swing adsorbers, condensers, boilers, steam drums, desulphurizers, deaerators, headers, manifolds, piping, etc.

Catalytic steam-hydrocarbon reforming takes place in a catalytic steam-hydrocarbon reformer 10. A catalytic steam-hydrocarbon reformer, also called a steam methane reformer, or catalytic steam reformer, is defined herein as any fired furnace used to convert feedstock containing elemental hydrogen and carbon to synthesis gas by a reaction with steam over a catalyst with heat provided by combustion of a fuel. Feedstock may be natural gas, methane, naphtha, propane, refinery fuel gas, refinery off-gas, or other suitable reformer feedstock known in the art. Suitable operating temperatures range from 350°C to 650°C at the inlet and 750°C to 950°C at the outlet of the reformer tubes. Suitable pressures range from 1 to 50 atm. Preferred operating conditions for a catalytic steam-hydrocarbon reformer are known in the art.

Feedstock is blended with steam to form reformer feed gas mixture 11. The feedstock for forming the reformer feed gas mixture 11 may be pretreated in one or both of a hydrogenation unit (not shown) and/or a hydrodesulphurization unit (not shown) to remove sulfur. Hydrogen is blended with the feedstock prior to passing the feedstock to the hydrogenation unit and/or the hydrodesulphurization unit.

The reformer feed gas mixture 11 may be "prereformed" in a prereformer (not shown). The feed to the prereformer comprises H₂, which may be added and/or left over from the hydrogenation unit and/or the hydrodesulphurization unit. The feed to the prereformer has a steam-to-carbon molar ratio and a hydrogen stoichiometric ratio, which may have ranges as described in EP2762442.

As used herein, a reformate stream is any stream comprising hydrogen and carbon monoxide formed from the reforming reaction of a hydrocarbon and steam.

Reformer furnaces with a plurality of catalyst-containing reformer tubes, i.e. tubular reformers, are well known in the art. Suitable materials and methods of construction are known. Catalyst in the catalyst-containing reformer tubes may be any suitable catalyst known in the art, for example, a supported catalyst comprising nickel.

The hydrogen production facility 1 also comprises a pressure swing adsorption unit 50. A pressure swing adsorption unit is defined as any device that separates different gas components by preferential adsorption of at least one component relative to another component. The pressure swing adsorption unit comprises a plurality of adsorption beds each containing one or more adsorbents. Pressure swing adsorption units, their design, adsorbents for use therein, their operation and manufacture are well-known. Any suitable pressure swing adsorption unit may be used in the present process.

The process comprises a catalytic steam-hydrocarbon reformer production state. During the catalytic steam-hydrocarbon reformer production state, a reformer feed gas mixture 11 is introduced into the plurality of catalyst-containing reformer tubes 15, the reformer feed gas mixture 11 is reacted in a reforming reaction under reaction conditions effective to form a reformate 12 comprising H₂, CO, CH₄, and H₂O, and the reformate 12 is withdrawn from the plurality of catalyst-containing reformer tubes 15. Also during the catalytic steam-hydrocarbon reformer production state, a fuel 19 is combusted with an oxidant gas 14 in the reformer furnace 25 external to the plurality of catalyst-containing tubes 15 to provide heat for the reforming reaction.

The reformer feed gas mixture 11 comprises steam and hydrocarbons, typically in the form of natural gas or prereformed natural gas. The relative amounts of steam and hydrocarbons in the reformer feed gas mixture are defined by a steam-to-carbon molar ratio. The steam-to-carbon molar ratio is a conventional term in the field of hydrogen production. The steam-to-carbon molar ratio (S/C ratio) is defined as the (overall) ratio of the moles of steam to moles of carbon atoms in the hydrocarbons in the feed(s) to the reformer. For example if the molar flow rate of steam is 6 moles/s, the molar flow rate of methane is 1 mole/s and the molar flow rate of ethane is 1 mole/s, the steam-to-carbon molar ratio is 2.0. 1 mole/s of methane provides 1 mole of carbon per second and 1 mole/s of ethane provides 2 moles of carbon per second. The steam-to-carbon molar ratio during the catalytic steam-hydrocarbon reformer production state may range from 1.5 to 5, or from 1.5 to 3.5.

The fuel 19 comprises at least a portion of a by-product gas 65 from the pressure swing adsorption unit 50. The by-product gas 65 from the pressure swing adsorption unit is often called "tail gas." The fuel 19 may also comprise a supplemental fuel 18, which is typically called "trim fuel." Supplemental fuel 18 may be natural gas or other suitable fuel. The by-product gas and the trim fuel may be mixed and introduced through burners together into the reformer furnace 25 or each may be introduced separately through separate ports in the burners. The by-product gas may provide 50 to 98 % of the heat duty with the balance provided by trim fuel.

Oxidant gas 14 is typically air, which may be preheated by indirect heat transfer with combustion product gases in the convection section of the reformer furnace 25. The oxidant gas 14 may be oxygen-enriched air or industrial grade oxygen. The oxidant gas 14 may comprise gas turbine exhaust.

The process comprises a pressure swing adsorption unit production state. During the pressure swing adsorption unit production state, the pressure swing adsorption unit 50 separates a pressure swing adsorption unit feed gas 51 to produce the H₂-containing product 60 and the by-product gas 65. The pressure swing adsorption unit feed gas 51 is formed from at least a portion of the reformate 12 withdrawn from the plurality of catalyst-containing reformer tubes 15 of the catalytic steam-hydrocarbon reformer 10 undergoing the catalytic steam-hydrocarbon reformer production state.

As shown in the FIG., reformate 12 may be passed to waste heat boiler 20 where water 22 is passed in indirect heat transfer with the reformate to form steam 24. The steam generation system may include a steam drum, deaerator, etc. as is known in the art. The reformate may be passed to one or more shift reactors 30 containing shift catalyst 34 to react water with CO and form additional H₂ in the reformate. The reformate stream may be further cooled to condense water 44, which may be removed in a condenser/ knock-out drum 40. The reformate may also be passed to a CO₂ removal unit (not shown) to form a CO₂ by-product before being passed to the pressure swing adsorption unit 50. The pressure swing adsorption unit 50 may also be designed to produce a CO₂ by-product.

Each of the plurality of adsorption beds 55 are subjected to a repetitive cycle of steps typically called a pressure swing adsorption cycle. The repetitive cycle of steps comprise a production step, a depressurizing equalization step, a blowdown step, a pressurizing equalization step, and a pressurization step. Pressure swing adsorption cycles are well-known in the art and the various steps are described for example in U.S. Pat. Appl. Pub. No. 2014/0373713. Any suitable pressure swing adsorption cycle may be used in the present process.

The process comprises a catalytic steam-hydrocarbon reformer shutdown mode. The catalytic steam-hydrocarbon reformer shutdown mode comprises discontinuing introduction of the reformer feed gas mixture 11 into the plurality of catalyst-containing tubes 15 and discontinuing combustion of the fuel 19 with the oxidant gas 14. The catalytic steam-hydrocarbon reformer shutdown mode is subsequent to the catalytic steam-hydrocarbon reformer production state. During the catalytic steam-hydrocarbon reformer shutdown mode, the reformer feed gas mixture 11 is not introduced into the plurality of catalyst-containing tubes 15 of the catalytic steam-hydrocarbon reformer 10 and the fuel 19 is not combusted in the reformer furnace 25.

After discontinuing introduction of the reformer feed gas mixture 11 into the plurality of catalyst-containing tubes 15 during the catalytic steam-hydrocarbon reformer shutdown mode, the catalytic steam-hydrocarbon reformer shutdown mode may further comprise purging the plurality of catalyst-containing reformer tubes 15 with N₂ and/or steam to decrease the total concentration of combustible gases (e.g. CH₄, CO, and H₂) to less than 1 volume %. Nitrogen and/or steam may be provided in an amount sufficient to decrease the concentration of combustible gases in each of the plurality of reformer tubes below the lower explosive limit (LEL) of the combustible gas mixture contained therein.

The process comprises a pressure swing adsorption unit shutdown mode, which occurs subsequent to the pressure swing adsorption unit production state. The pressure swing adsorption unit shutdown mode comprises discontinuing introduction of the pressure swing adsorption unit feed gas 51 into the plurality of adsorption beds 55 due to the catalytic steam-hydrocarbon reformer 10 entering the catalytic steam-hydrocarbon reformer shutdown mode. During the pressure swing adsorption unit shutdown mode, no pressure swing adsorption unit feed gas comprising reformate from the catalytic steam-hydrocarbon reformer is introduced into any of the plurality of adsorption beds 55.

Subsequent to discontinuing introduction of the pressure swing adsorption unit feed gas 51 into the plurality of adsorption beds 55, the shutdown mode comprises purging the plurality of adsorption beds 55 with N₂ 95 to provide a N₂ concentration in each of the plurality of adsorption beds 55 greater than 96 volume % N₂, or greater than 99.6 volume % N₂, or greater than 99.96 volume % N₂. The N₂ 95 may be provided from N₂ source 90, which may be a compressed gas N₂ source or a liquid N₂ source with vaporizers. The plurality of adsorption beds 55 may be purged with a quantity of N₂ in an amount sufficient to provide a N₂ concentration in each of the plurality of adsorption beds greater than 96 volume % N₂, or greater than 99.6 volume % N₂, or greater than 99.96 volume % N₂, and/or decrease the concentration of combustible gases in the plurality of adsorption beds below the lower explosive limit or below 10 % of the lower explosive limit, or below 1 % of the lower explosive limit. Purging with N₂ may be by sweep purging or pressurized purging. In sweep purging, N₂ is introduced into the adsorption vessels while an effluent gas containing unwanted combustible gases is simultaneously removed. The pressure of the N₂ during sweep purging may range from greater than atmospheric pressure to 377 kPa (40 psig) or may range from 170 kPa (10 psig) to 273 kPa (25 psig). In pressurized purging, N₂ is introduced to increase the pressure in the adsorption vessels to any suitable pressure and an effluent gas is subsequently withdrawn from the adsorption vessels thereby removing unwanted combustible gases from the adsorption beds and decreasing the pressure in the adsorption vessels.

Combustible gases are purged from the adsorption beds in order to avoid an explosive mixture or toxic hazard from CO in the adsorption beds in the subsequent maintenance state.

The process comprises a pressure swing adsorption unit maintenance state. During the pressure swing adsorption unit maintenance state air is introduced into the plurality of adsorption beds 55 and at least a portion of the N₂ in the plurality of adsorption beds 55 that was introduced during the pressure swing adsorption shutdown mode escapes the plurality of adsorption beds 55. Introduction of air into the plurality of adsorption beds is unavoidable when opening the adsorption system during maintenance. Maintenance may include replacing adsorbent material, replacing valves, replacing sensors, etc.

The process may comprise a catalytic steam-hydrocarbon reformer maintenance state. During the catalytic steam-hydrocarbon reformer maintenance state air is introduced into the plurality of catalyst-containing reformer tubes and at least a portion of the N₂ in the plurality of catalyst-containing reformer tubes that was introduced during the catalytic steam-hydrocarbon reformer shutdown mode escapes the plurality of catalyst-containing reformer tubes. Introduction of air into the plurality of catalyst-containing reformer tubes is unavoidable when opening the system during maintenance. Maintenance may include replacing one or more of the plurality of catalyst-containing tubes, replacing reforming catalyst, replacing sensors, etc.

The process comprises a pressure swing adsorption unit startup mode subsequent to the pressure swing adsorption unit maintenance state. The pressure swing adsorption unit startup mode comprises purging the plurality of adsorption beds 55 with N₂ 95 to decrease the concentration of O₂ in each of the plurality of adsorption beds 55 to less than 1.3 volume % O₂, or less than 0.5 volume % O₂. Purging with N₂ may be by sweep purging or pressurized purging. The pressure of the N₂ during sweep purging may range from greater than atmospheric pressure to 377 kPa (40 psig) or may range from 170 kPa (10 psig) to 273 kPa (25 psig). Oxygen is removed to avoid the formation of an explosive mixture in the subsequent step of purging the plurality of adsorption beds with H₂.

The pressure swing adsorption unit startup mode comprises purging the plurality of adsorption beds with H₂ 85 to provide a H₂ concentration in each of the plurality of adsorption beds 55 greater than 85 volume % H₂ or greater than 95 volume % H₂ or greater than 99 volume % H₂. The H₂ may be from pipeline H₂ 80. Purging with H₂ may be by sweep purging or pressurized purging. In sweep purging, H₂ is introduced into the adsorption vessels while an effluent gas containing N₂ is simultaneously removed. The pressure of the H₂ during sweep purging may range from greater than atmospheric pressure to 377 kPa (40 psig) or may range from 170 kPa (10 psig) to 273 kPa (25 psig). In pressurized purging, H₂ is introduced to increase the pressure in the adsorption vessels to any suitable pressure and an effluent gas is subsequently withdrawn from the adsorption vessels thereby removing unwanted N₂ from the adsorption beds and decreasing the pressure in the adsorption vessels. For pressurized purging, the adsorption vessels may be pressurized/depressurized 3 or more times until a desired concentration of H₂ in the adsorption beds is obtained.

The pressure swing adsorption unit startup mode comprises adjusting a pressure of the H₂ inside each of the plurality of adsorption beds 55 to within a respective defined target pressure range for each of the plurality of adsorption beds 55. The respective defined target pressure range is defined by the step each adsorption bed will undergo upon restarting the repetitive cycle of steps. Each of the plurality of adsorption beds will restart the repetitive cycle of steps at a particular and defined step of the repetitive cycle upon commencing restart. Each of the defined steps has a defined target pressure range for the start of the respective step. For example, the production step may have a target pressure range from 1 MPa to 4 MPa or from 2.7 MPa to 3.3 MPa, the depressurizing equalization step may have a target pressure range from 1 MPa to 4 MPa or from 2.7 to 3.3 MPa at the beginning of the depressurizing equalization step, the blowdown step may have a target pressure range from 0.2 MPa to 1 MPa or from 0.4 MPa to 0.7 MPa at the beginning of the blowdown step, the pressurizing equalization step may have a target pressure range from 0.12 MPa to 1.5 MPa or from 0.135 MPa to 0.148 MPa at the beginning of the pressurizing equalization step, and the pressurization step may have a target pressure range from 1 MPa to 3.5 MPa or from 2.1 MPa to 2.4 MPa at the beginning of the pressurization step.

The plurality of adsorption beds are purged with H₂ 85 and/or the pressure of the H₂ inside each of the plurality of adsorption beds 55 is adjusted to within the respective defined target pressure range for each of the plurality of adsorption beds 55 independent of any of the plurality of adsorption beds 85 undergoing any step of the repetitive cycle of steps. The pressure of the H₂ inside each of the plurality of adsorption beds 55 may be adjusted without the respective one of the plurality of adsorption beds 55 undergoing the repetitive cycle of steps it undergoes during the pressure swing adsorption unit production state. The repetitive cycle of the pressure swing adsorption unit 50 may still be halted at all in the pressure swing adsorption unit startup mode.

Flow from the catalytic steam-hydrocarbon reformer 10 to the pressure swing adsorption unit 50 may be interrupted while the pressure of the H₂ inside each of the plurality of adsorption beds 55 is adjusted within the respective defined target temperature range for each of the plurality of adsorption beds 55.

When purging the plurality of adsorption beds 55 during the pressure swing adsorption unit startup mode, H₂ 85 may be introduced into one or more of the adsorption beds 55 directly from one or more sources, each external of the pressure swing adsorption unit 50, i. e. not via one of the adsorption beds 55 of the pressure swing adsorption unit 50, as external purge H₂ 85 for the respective one or more of the adsorption beds 55. The external purge H₂ 85 may be introduced into each of the one or more adsorption beds 55 directly until the H₂ concentration in the respective adsorption bed 55 is greater than 85 volume % H₂ or greater than 95 volume % H₂ or greater than 99 volume % H₂. Purging of two or more of the adsorption beds directly with the external purge H₂ 85 may be by sweep purging or by pressurized purging. In sweep purging H₂ 85 may be introduced into the respective one of the adsorption beds 55 at a pressure greater than atmospheric pressure and below the production step pressure. Two or more of the adsorption beds 55 may be purged in parallel each directly with external purge H₂ 85.

The pressure swing adsorption unit startup mode may comprise purging one or more pipe headers 57, 58, 59 operatively connected to the plurality of adsorption beds 55 with N₂ 95 to decrease the concentration of O₂ in the one or more pipe headers 57, 58, 59 to less than 1.3 volume % O₂, or less than 0.5 volume % O₂, subsequently purging the one or more pipe headers 57, 58, 59 with H₂ 85 to provide a H₂ concentration in each of the one or more pipe headers greater than 99 volume % H₂, and adjusting a pressure of the H₂ inside each of the one or more pipe headers to within a respective defined target pressure range for each of the one or more pipe headers 57, 58, 59. The respective defined target pressure range for each of the one or more pipe headers is defined by a desired pressure upon restarting the repetitive cycle of steps of the plurality of adsorption beds. The one or more pipe headers may include a feed header 57, product header 59, purge gas header (not shown), and an equalization gas header (not shown). Purging with N₂ and purging with H₂ can be by sweep purging or a pressurized purging. The pressure of the N₂ or H₂ during sweep purging may range from greater than atmospheric pressure to 377 kPa (40 psig) or may range from 170 kPa (10 psig) to 273 kPa (25 psig). The target pressure range for each of the headers corresponds to the target pressure range for the adsorption bed connected to the respective header upon first restarting the repetitive cycle of steps.

The benefit of purging the plurality of adsorption beds and/or pipe headers with H₂ to provide a H₂ concentration in each of the plurality of adsorption beds greater than 99 volume % H₂ and adjusting the pressure of the H₂ inside each of the plurality of adsorption beds and/or pipe headers to within respective defined target pressure ranges is that the adsorption beds will avoid upset due to any pressure imbalance and can produce suitable quality H₂ product immediately upon restarting the repetitive cycle of steps.

As defined herein, the pressure swing adsorption unit startup mode ends when the H₂ product 60 from the pressure swing adsorption unit 50 is passed to a H₂ pipeline 80, to a H₂ product line to a customer use point, or any downstream internal process units. A H₂ pipeline is a pipeline that is part of a hydrogen infrastructure. Typically two or more hydrogen production units provide hydrogen to the H₂ pipeline.

The process comprises a catalytic steam-hydrocarbon reformer startup mode. The catalytic steam-hydrocarbon reformer startup mode comprises introducing a startup-mode reformer feed gas mixture 11' into the plurality of catalyst-containing reformer tubes 15, reacting the startup-mode reformer feed gas mixture under reaction conditions effective to form a startup-quality reformate 12' comprising H₂, CO, CH₄, and H₂O, and withdrawing the startup-quality reformate 12' from the plurality of catalyst-containing reformer tubes 15. The catalytic steam-hydrocarbon reformer startup mode also comprises combusting a startup-mode fuel 19' with a startup-mode oxidant gas 14' in the reformer furnace 25 external to the plurality of catalyst-containing tubes 15. The oxidant/fuel ratio may vary during the startup mode and may be higher than during the production state. Suitable oxidant/fuel ratios during startup are known in the art.

The startup-mode reformer feed gas mixture 11' may have a S-to-C molar ratio ranging from 4 to 25, or ranging from 6 to 25, or ranging from 9 to 25. The S-to-C molar ratio may be greater at the beginning of the startup mode.

The startup-mode fuel 19' may be any suitable fuel. In contrast to the fuel used during the catalytic steam-hydrocarbon reformer production state which comprises by-product gas 65 from the pressure swing adsorption unit 55, the startup-mode fuel 19' may comprise no by-product gas 65 from the pressure swing adsorption unit 55.

The startup-mode oxidant gas 14' may be air, which may be preheated by indirect heat transfer with combustion product gases in the convection section of the reformer furnace 25. The startup-mode oxidant gas 14' may be oxygen-enriched air or industrial grade oxygen. The startup-mode oxidant gas 14 may comprise gas turbine exhaust.

The startup-quality reformate 12' may be "off-specification", where it is not suitable to produce the H₂-containing product by separation in the pressure swing adsorption unit. The startup-quality reformate 12' may be vented or flared via line 67. The startup-quality reformate 12' may be passed via line 42' and used to form a portion of the startup-mode fuel 19'. It may be desirable not to introduce any of the startup-quality reformate 12' into any of the plurality of adsorption beds 55.

The catalytic steam-hydrocarbon reformer startup mode may be after the catalytic steam-hydrocarbon reformer shutdown mode.

At least a portion of the pressure swing adsorption startup mode is concurrent with at least a portion of the catalytic steam-hydrocarbon reformer startup mode.

The pressure swing adsorption startup mode may be initiated prior to initiating the catalytic steam-hydrocarbon reformer startup mode.

The catalytic steam-hydrocarbon reformer startup mode may comprise introducing a N₂- and steam-containing stream 16 during heat-up of the plurality of catalyst-containing reformer tubes 15 prior to introducing the startup-mode reformer feed gas mixture 11' into the plurality of catalyst-containing reformer tubes 15. Nitrogen from nitrogen source 90 may be blended with steam 5 to form the N₂- and steam-containing stream 16. Nitrogen source 90 may be any suitable and known nitrogen source.

The process may comprise a second catalytic steam-hydrocarbon reformer production state subsequent to the catalytic steam-hydrocarbon reformer startup mode. During the second catalytic steam-hydrocarbon reformer production state, a second state reformer feed gas mixture 111 is introduced into the plurality of catalyst-containing reformer tubes 15, the second state reformer feed gas mixture 111 is reacted in a reforming reaction under reaction conditions effective to form a second state reformate 112 comprising H₂, CO, CH₄, and H₂O, and the second state reformate 112 is withdrawn from the plurality of catalyst-containing reformer tubes 15. Also during the second catalytic steam-hydrocarbon reformer production state, a second state fuel 119 is combusted with a second state oxidant gas 114 in the reformer furnace 25 external to the plurality of catalyst-containing tubes 15 to provide heat for the reforming reaction. The second state fuel 119 comprises a second state by-product gas 165 from the pressure swing adsorption unit 50 and optionally a supplemental fuel. The second state oxidant gas 114 may be air, which may be preheated by indirect heat transfer with combustion product gases in the convection section of the reformer furnace 25. The second state oxidant gas 114 may be oxygen-enriched air or industrial grade oxygen. The second state oxidant gas 114 may comprise gas turbine exhaust.

The process may comprise a second pressure swing adsorption unit production state subsequent to the pressure swing adsorption unit startup mode. During the second pressure swing adsorption unit production state, the pressure swing adsorption unit 50 separates a second state pressure swing adsorption unit feed gas 151 formed from at least a portion of the second state reformate 112 withdrawn from the plurality of catalyst-containing reformer tubes 15 of the catalytic steam-hydrocarbon reformer 10 undergoing the second catalytic steam-hydrocarbon reformer production state to produce the H₂-containing product 60 and the second state by-product gas 165.

### Example 1

A hydrogen production facility having a design production capacity of 100 metric tons per day of H₂ is shutdown for routine maintenance. After maintenance the catalytic steam-hydrocarbon reformer is started up and brought up to temperature while flowing N₂ and steam through the plurality of catalyst-containing reformer tubes. Natural gas fuel is combusted with air in the reformer furnace external to the plurality of catalyst-containing tubes. While fuel is combusted in the reformer furnace, the flow rate of N₂ and steam is maintained at greater than a specified minimum flow rate. The crossover temperature and the outlet temperatures of the reformer tubes are monitored.

Upon reaching a desired temperature in the catalytic steam-hydrocarbon reformer, a mixed feed comprising natural gas and steam is introduced into the plurality of catalyst-containing reformer tubes. The rate of introduction of mixed feed is gradually increased and the furnace heat rate is adjusted accordingly via introduction of combustion fuel to maintain desired temperatures in the reformer.

Upon reaching about 50% of the design production rate of the reformer, reformate from the reformer is passed to the pressure swing adsorption unit and the pressure swing adsorption unit is started. The cycle time for the pressure swing adsorption unit is shorter than during the pressure swing adsorption unit production state. Process condensate is removed in a condensate separator upstream of the pressure swing adsorption unit. Clean process condensate is recycled to the steam producing system. Condensate with impurities is passed to a wastewater system. Tail gas from the pressure swing adsorption unit is passed to the reformer furnace and replaces some of the combustion fuel in the reformer furnace. Effluent from the product end of the pressure swing adsorption unit does not meet design specifications and is vented as it cannot be supplied to a customer or introduced into a H₂ pipeline system or supplied to a downstream process unit.

It typically takes about 4-24 hours after initial reformate introduction into the pressure swing adsorption unit for the pressure swing adsorption unit to meet the required hydrogen purity requirements. During this time, at 50% of the design production rate, i.e.50 metric tons per day of H₂, is lost and fuel is being consumed.

### Example 2

A hydrogen production facility having a design production capacity of 100 metric tons per day of H₂ is shutdown for routine maintenance. After maintenance the catalytic steam-hydrocarbon reformer is started up and brought up to temperature while flowing N₂ and steam through the plurality of catalyst-containing reformer tubes. Natural gas fuel is combusted with air in the reformer furnace external to the plurality of catalyst-containing tubes.

Concurrent with the startup of the hydrogen production unit, the pressure swing adsorption unit is purged with N₂ and subsequently purged with H₂ from a H₂ pipeline. The H₂ pressures in each of adsorption beds and headers of the pressure swing adsorption unit are adjusted to within defined target pressure ranges for each of the adsorption beds and headers. The defined target pressure ranges are defined by the desired pressures in each of the respective adsorption beds and headers upon restarting the pressure swing adsorption unit.

Upon reaching a desired temperature in the catalytic steam-hydrocarbon reformer, a mixed feed comprising natural gas and steam is introduced into the plurality of catalyst-containing reformer tubes. The rate of introduction of mixed feed is gradually increased and the furnace heat rate is adjusted accordingly to maintain desired temperatures in the reformer by adjusting the flow rate of combustion fuel and combustion air.

Upon reaching about 50% of the design production rate of the reformer, the pressure swing adsorption unit is started and reformate from the reformer is passed to the pressure swing adsorption unit. Tail gas from the pressure swing adsorption unit is passed to the reformer furnace and replaces some of the natural gas fuel in the reformer furnace. Effluent from the product end of the pressure swing adsorption unit immediately meets purity specifications and is supplied to a customer or introduced into a H₂ pipeline system.

The feed mixture to the reformer is increased up to the design production rate. The flow rate of reformate to the pressure swing adsorption unit is accordingly increased and an increased flow rate of tail gas is produced and supplied to the reformer furnace as combustion fuel.

Starting up the reformer and pressure swing adsorption unit as described in example 2 results in considerable time and fuel savings as compared to example 1.

## Claims

1. A process for the production of a H₂-containing product (60) in a hydrogen production facility (1) comprising a catalytic steam-hydrocarbon reformer (10) and a pressure swing adsorption unit (50), the catalytic steam-hydrocarbon reformer (10) comprising a plurality of catalyst-containing reformer tubes (15) in a reformer furnace (25) and the pressure swing adsorption unit (50) comprising a plurality of adsorption beds (55), the process comprising:
a catalytic steam-hydrocarbon reformer production state wherein a reformer feed gas mixture (11) is introduced into the plurality of catalyst-containing reformer tubes (15), the reformer feed gas mixture (11) is reacted in a reforming reaction under reaction conditions effective to form a reformate (12) comprising H₂, CO, CH₄, and H₂O, and the reformate (12) is withdrawn from the plurality of catalyst-containing reformer tubes (15), and a fuel (19) is combusted with an oxidant gas (14) in the reformer furnace (25) external to the plurality of catalyst-containing tubes (15) wherein the fuel (19) comprises at least a portion of a by-product gas (65) from the pressure swing adsorption unit (50);
a pressure swing adsorption unit production state wherein the pressure swing adsorption unit (50) separates a pressure swing adsorption unit feed gas (51) formed from at least a portion of the reformate (12) withdrawn from the plurality of catalyst-containing reformer tubes (15) of the catalytic steam-hydrocarbon reformer (10) undergoing the catalytic steam-hydrocarbon reformer production state to produce the H₂-containing product (60) and the by-product gas (65), wherein each of the plurality of adsorption beds (55) are subjected to a repetitive cycle of steps, the repetitive cycle of steps comprising a production step, a depressurizing equalization step, a blowdown step, a pressurizing equalization step, and a pressurization step;
a catalytic steam-hydrocarbon reformer shutdown mode comprising discontinuing introduction of the reformer feed gas mixture (11) into the plurality of catalyst-containing tubes (15) and discontinuing combustion of the fuel (19) with the oxidant gas (14), wherein the catalytic steam-hydrocarbon reformer shutdown mode is subsequent to the catalytic steam-hydrocarbon reformer production state;
a pressure swing adsorption unit shutdown mode comprising discontinuing introduction of the pressure swing adsorption unit feed gas (51) into the plurality of adsorption beds (55) due to the catalytic steam-hydrocarbon reformer (10) entering the catalytic steam-hydrocarbon reformer shutdown mode, and subsequently purging the plurality of adsorption beds (55), wherein the pressure swing adsorption unit shutdown mode occurs after the pressure swing adsorption unit production state;
a pressure swing adsorption unit startup mode comprising purging the plurality of adsorption beds (55) with H₂ (85) to provide a H₂ concentration in each of the plurality of adsorption beds (55) greater than 85 volume % H₂, or greater than 95 volume % H₂, preferably greater than 99 volume % H₂ and adjusting a pressure of the H₂ inside each of the plurality of adsorption beds (55) to within a respective defined target pressure range for each of the plurality of adsorption beds (55); and a
catalytic steam-hydrocarbon reformer startup mode comprising introducing a startup-mode reformer feed gas mixture (11') into the plurality of catalyst-containing reformer tubes (15), reacting the startup-mode reformer feed gas mixture under reaction conditions effective to form a startup-quality reformate (12') comprising H₂, CO, CH₄, and H₂O, and withdrawing the startup-quality reformate (12') from the plurality of catalyst-containing reformer tubes (15), and combusting a startup-mode fuel (19') with a startup-mode oxidant gas (14') in the reformer furnace (25) external to the plurality of catalyst-containing tubes (15);
wherein at least a portion of the pressure swing adsorption startup mode is concurrent with at least a portion of the catalytic steam-hydrocarbon reformer startup mode;
**characterized in that**
in the catalytic steam-hydrocarbon reformer shutdown mode the plurality of adsorption beds (55) is purged with N₂ (95) to provide a N₂ concentration in each of the plurality of adsorption beds (55) greater than 96 volume % N₂, or greater than 99.6 volume % N₂;
the process comprises a pressure swing adsorption unit maintenance state wherein the repetitive cycle of steps is halted and wherein air is introduced into the plurality of adsorption beds (55) and at least a portion of the N₂ in the plurality of adsorption beds (55) that was introduced during the pressure swing adsorption shutdown mode escapes the plurality of adsorption beds (55); and
the pressure swing adsorption unit startup mode comprises purging the plurality of adsorption beds (55) with N₂ (95) to decrease the concentration of O₂ in each of the plurality of adsorption beds (55) to less than 1.3 volume % O₂, preferably less than about 0.5 volume % O₂, and subsequently purging the plurality of adsorption beds with the H₂ (85),
*wherein* the respective defined target pressure range to which the pressure of the H2 inside each of the plurality of adsorption beds (55) is adjusted in the pressure swing adsorption unit startup mode is defined by the step each adsorption bed will undergo first upon restarting the repetitive cycle of steps, wherein the pressure swing adsorption unit startup mode is subsequent to the pressure swing adsorption unit maintenance state.

2. The process according to claim 1 wherein during the pressure swing adsorption unit startup mode, the plurality of adsorption beds (55) are purged with H₂ (85) independent of any of the plurality of adsorption beds (85) undergoing any step of the repetitive cycle of steps and/or the pressure of the H₂ inside each of the plurality of adsorption beds (55) is adjusted to within the respective defined target pressure range for each of the plurality of adsorption beds (55) independent of any of the plurality of adsorption beds (85) undergoing any step of the repetitive cycle of steps.

3. The process of claim 1 or claim 2 wherein during the pressure swing adsorption unit startup mode, the repetitive cycle of steps is still halted.

4. The process of claim 3, wherein during the pressure swing adsorption unit startup mode, the plurality of adsorption beds (55) are purged with H₂ (85) and/or the pressure of the H₂ inside each of the plurality of adsorption beds (55) is adjusted prior to undergoing any step of the repetitive cycle of steps.

5. The process of any one of the preceding claims further comprising restarting the repetitive cycle of steps subsequent to completing the pressure swing adsorption unit startup mode.

6. The process of any one of the preceding claims wherein the pressure swing adsorption startup mode is initiated prior to initiating the catalytic steam-hydrocarbon reformer startup mode.

7. The process of any one of the preceding claims wherein no portion of the startup-quality reformate (12') is introduced into any of the plurality of adsorption beds (55) and/or wherein the startup-mode fuel (19') comprises no by-product gas (65) from the pressure swing adsorption unit (55).

8. The process of any one of the preceding claims wherein the H₂ for purging the plurality of adsorption beds during the startup mode is provided from a H₂ pipeline.

9. The process of any one of the preceding claims wherein the startup-quality reformate (12') is at least one of vented (67), flared, or used to form at least a portion of the startup-mode fuel (19').

10. The process of any one of the preceding claims wherein the catalytic steam-hydrocarbon reformer startup mode comprises introducing a N₂- and steam-containing stream (16) during heat-up of the plurality of catalyst-containing reformer tubes (15) prior to introducing the startup-mode reformer feed gas mixture (11') into the plurality of catalyst-containing reformer tubes (15).

11. The process of any one of the preceding claims wherein after discontinuing introduction of the reformer feed gas mixture (11) into the plurality of catalyst-containing tubes (15) in the catalytic steam-hydrocarbon reformer shutdown mode, the catalytic steam-hydrocarbon reformer shutdown mode comprises purging the plurality of catalyst-containing reformer tubes (15) with N₂ and/or steam to decrease the total concentration of combustible gases to less than 1 volume %.

12. The process of any one of the preceding claims wherein at least one of the plurality of adsorption beds (55) commences the production step upon restarting, at least one of the plurality of adsorption beds (55) commences the depressurizing equalization step upon restarting, at least one of the plurality of adsorption beds (55) commences the blowdown step upon restarting, at least one of the plurality of adsorption beds (55) commences the pressurizing equalization step upon restarting, and at least one of the plurality of adsorption beds (55) commences the pressurization step upon restarting.

13. The process of any one of the preceding claims further comprising:
a second catalytic steam-hydrocarbon reformer production state wherein a second state reformer feed gas mixture (111) is introduced into the plurality of catalyst-containing reformer tubes (15), the second state reformer feed gas mixture (111) is reacted under reaction conditions effective to form a second state reformate (112) comprising H₂, CO, CH₄, and H₂O, and the second state reformate (112) is withdrawn from the plurality of catalyst-containing reformer tubes (15), and a second state fuel (119) is combusted with a second state oxidant gas (114) in the reformer furnace (25) external to the plurality of catalyst-containing tubes (15) wherein the second state fuel (119) comprises a second state by-product gas (165) from the pressure swing adsorption unit (50); and
a second pressure swing adsorption unit production state wherein the pressure swing adsorption unit (50) separates a second state pressure swing adsorption unit feed gas (151) formed from at least a portion of the second state reformate (112) withdrawn from the plurality of catalyst-containing reformer tubes (15) of the catalytic steam-hydrocarbon reformer (10) undergoing the second catalytic steam-hydrocarbon reformer production state to produce the H₂-containing product (60) and the second state by-product gas (165).

14. The process of any one of the preceding claims wherein the pressure swing adsorption unit startup mode further comprises purging one or more pipe headers (57, 58, 59) operatively connected to the plurality of adsorption beds (55) with N₂ (95) to decrease the concentration of O₂ in the one or more pipe headers (57, 58, 59) to less than 1.3 volume % O₂, preferably less than 0.5 volume % O₂, subsequently purging the one or more pipe headers (57, 58, 59) with H₂ (85) to provide a H₂ concentration in each of the one or more pipe headers greater than 85 volume % H₂, preferably greater than 99 volume % H₂, and adjusting a pressure of the H₂ inside each of the one or more pipe headers to within a respective defined target pressure range for each of the one or more pipe headers (57, 58, 59).

15. The process of any one of the preceding claims further comprising a catalytic steam-hydrocarbon reformer maintenance state wherein air is introduced into the plurality of catalyst-containing reformer tubes and at least a portion of the N₂ in the plurality of catalyst-containing reformer tubes that was introduced during the catalytic steam-hydrocarbon reformer shutdown mode escapes the plurality of catalyst-containing reformer tubes.

## Patentansprüche

1. Verfahren zur Herstellung eines H₂-haltigen Produkts (60) in einer Wasserstoffherstellungsanlage (1) mit einem katalytischen Dampf-Kohlenwasserstoff-Reformer (10) und einer Druckwechseladsorptionseinheit (50), wobei der katalytische Dampf-Kohlenwasserstoff-Reformer (10) mehrere katalysatorhaltige Reformerrohre (15) in einem Reformerofen (25) umfasst, wobei die Druckwechseladsorptionseinheit (50) mehrere Adsorptionsbetten (55) umfasst, wobei das Verfahren Folgendes umfasst:
einen Herstellungszustand des katalytischen Dampf-Kohlenwasserstoff-Reformers, bei dem eine Reformer-Zuführungsgasmischung (11) in die mehreren katalysatorhaltigen Reformerrohre (15) eingeführt wird, bei dem die Reformer-Zuführungsgasmischung (11) in einer Reforming-Reaktion unter Reaktionsbedingungen reagiert wird, die zur Bildung eines H₂, CO, CH₄ und H₂O umfassenden Reformats (12) wirksam sind, und bei dem das Reformat (12) aus den mehreren katalysatorhaltigen Reformerrohren (15) entzogen und ein Brennstoff (19) mit einem oxidierenden Gas (14) in dem Reformerofen (25) außerhalb der mehreren katalysatorhaltigen Reformerrohre (15) verbrannt wird, wobei der Brennstoff (19) wenigstens einen Teil eines Nebenproduktgases (65) von der Druckwechseladsorptionseinheit (50) umfasst,
einen Herstellungszustand der Druckwechseladsorptionseinheit, bei dem die Druckwechseladsorptionseinheit (50) ein Druckwechseladsorptionseinheits-Zuführungsgas (51), das aus wenigstens einem Teil des Reformats (12) gebildet wird, das aus den mehreren katalysatorhaltigen Reformerrohren (15) des katalytischen Dampf-Kohlenwasserstoff-Reformers (10) entzogen wurde, der sich im Herstellungszustand des katalytischen Dampf-Kohlenwasserstoff-Reformers befindet, trennt, um das H₂-haltige Produkt (60) und das Nebenproduktgas (65) herzustellen, wobei jedes der mehreren Adsorptionsbetten (55) einer sich wiederholenden Abfolge von Schritten unterzogen wird, wobei zu der sich wiederholenden Abfolge von Schritten ein Herstellungsschritt, ein Druckentlastungsausgleichsschritt, ein Abschlämmungsschritt, ein Druckaufbauausgleichsschritt und ein Druckaufbauschritt gehören,
einen Abschaltmodus des katalytischen Dampf-Kohlenwasserstoff-Reformers, bei dem die Einführung der Reformer-Zuführungsgasmischung (11) in die mehreren katalysatorhaltigen Reformerrohre (15) und die Verbrennung des Brennstoffs (19) mit dem oxidierenden Gas (14) abgebrochen werden, wobei der Abschaltmodus des katalytischen Dampf-Kohlenwasserstoff-Reformers auf den Herstellungszustand des katalytischen Dampf-Kohlenwasserstoff-Reformers folgt,
einen Abschaltmodus der Druckwechseladsorptionseinheit, bei dem die Einführung des Druckwechseladsorptionseinheits-Zuführungsgases (51) in die mehreren Adsorptionsbetten (55) als Folge des Eintretens des Abschaltmodus des katalytischen Dampf-Kohlenwasserstoff-Reformers (10) abgebrochen wird und die mehreren Adsorptionsbetten (55) anschließend gespült werden, wobei der Abschaltmodus der Druckwechseladsorptionseinheit nach dem Herstellungszustand der Druckwechseladsorptionseinheit auftritt,
einen Anlaufmodus der Druckwechseladsorptionseinheit, bei dem die mehreren Adsorptionsbetten (55) mit H₂ (85) gespült werden, um in jedem der mehreren Adsorptionsbetten (55) eine H₂-Konzentration größer als 85 Vol.-% H₂ oder größer als 95 Vol.-% H₂, bevorzugt größer als 99 Vol.-% H₂ bereitzustellen, und bei dem ein Druck des in jedem der mehreren Adsorptionsbetten (55) vorkommenden H₂ innerhalb eines jeweiligen definierten Zieldruckbereichs für jedes der mehreren Adsorptionsbetten (55) eingestellt wird, und
einen Anlaufmodus des katalytischen Dampf-Kohlenwasserstoff-Reformers, bei dem eine Reformer-Zuführungsgasmischung (11') des Anlaufmodus in die mehreren katalysatorhaltigen Reformerrohre (15) eingeführt wird, bei dem die Reformer-Zuführungsgasmischung des Anlaufmodus unter Reaktionsbedingungen reagiert wird, die zur Bildung eines H₂, CO, CH₄ und H₂O umfassenden Reformats (12') einer Anlaufqualität wirksam sind, und bei dem das Reformat (12') der Anlaufqualität aus den mehreren katalysatorhaltigen Reformerrohren (15) entzogen wird, und bei dem ein Brennstoff (19') des Anlaufmodus mit einem oxidierenden Gas (14') des Anlaufmodus in dem Reformerofen (25) außerhalb der mehreren katalysatorhaltigen Reformerrohre (15) verbrannt wird,
wobei wenigstens ein Teil des Anlaufmodus der Druckwechseladsorptionseinheit gleichzeitig mit wenigstens einem Teil des Anlaufmodus des katalytischen Dampf-Kohlenwasserstoff-Reformers stattfindet,
**dadurch gekennzeichnet, dass**
bei dem Abschaltmodus des katalytischen Dampf-Kohlenwasserstoff-Reformers die mehreren Adsorptionsbetten (55) mit N₂ (95) gespült werden, um in jedem der mehreren Adsorptionsbetten (55) eine N₂-Konzentration größer als 96 Vol.-% N₂ oder größer als 99,6 Vol.-% N₂ bereitzustellen,
das Verfahren einen Instandhaltungszustand der Druckwechseladsorptionseinheit umfasst, bei dem die sich wiederholende Abfolge von Schritten angehalten wird, und wobei Luft in die mehreren Adsorptionsbetten (55) eingeleitet wird und wenigstens ein Teil des N₂ in den mehreren Adsorptionsbetten (55), das bei dem Abschaltmodus der Druckwechseladsorptionseinheit eingeleitet wurde, aus den mehreren Adsorptionsbetten (55) entkommt, und
bei dem Anlaufmodus der Druckwechseladsorptionseinheit die mehreren Adsorptionsbetten (55) mit N₂ (95) gespült werden, um in jedem der mehreren Adsorptionsbetten (55) die O₂-Konzentration auf weniger als 1,3 Vol.-% O₂, vorzugsweise weniger als 0,5 Vol.-% O₂ herabzusetzen, und die mehreren Adsorptionsbetten anschließend mit dem H₂ (85) gespült werden,
wobei der jeweilige definierte Zieldruckbereich, auf den der Druck des in jedem der mehreren Adsorptionsbetten (55) vorkommenden H₂ bei dem Anlaufmodus der Druckwechseladsorptionseinheit eingestellt wird, durch den Schritt definiert wird, dem jedes Adsorptionsbett zuerst nach Wiederanlauf der sich wiederholenden Abfolge von Schritten unterzogen wird, wobei der Anlaufmodus der Druckwechseladsorptionseinheit auf den Instandhaltungszustand der Druckwechseladsorptionseinheit folgt.

2. Verfahren nach Anspruch 1, wobei bei dem Anlaufmodus der Druckwechseladsorptionseinheit die mehreren Adsorptionsbetten (55) mit H₂ (85) gespült werden, unabhängig davon, ob irgendwelche der mehreren Adsorptionsbetten (55) irgendwelchem Schritt aus der sich wiederholenden Abfolge von Schritten unterzogen wird, und/oder der Druck des in jedem der mehreren Adsorptionsbetten (55) vorkommenden H₂ innerhalb des jeweiligen definierten Zieldruckbereichs für jedes der mehreren Adsorptionsbetten (55) eingestellt wird, unabhängig davon, ob irgendwelches der mehreren Adsorptionsbetten (55) irgendwelchem Schritt aus der sich wiederholenden Abfolge von Schritten unterzogen wird.

3. Verfahren nach Anspruch 1 oder Anspruch 2, wobei bei dem Anlaufmodus der Druckwechseladsorptionseinheit die sich wiederholende Abfolge von Schritten weiterhin angehalten wird.

4. Verfahren nach Anspruch 3, wobei bei dem Anlaufmodus der Druckwechseladsorptionseinheit die mehreren Adsorptionsbetten (55) mit H₂ (85) gespült werden und/oder der Druck des in jedem der mehreren Adsorptionsbetten (55) vorkommenden H₂ eingestellt wird, bevor sie irgendwelchem Schritt aus der sich wiederholenden Abfolge von Schritten unterzogen werden.

5. Verfahren nach einem der vorhergehenden Ansprüche, das ferner den Wiederanlauf der sich wiederholenden Abfolge von Schritten nach Beenden des Anlaufmodus der Druckwechseladsorptionseinheit umfasst.

6. Verfahren nach einem der vorhergehenden Ansprüche, wobei der Anlaufmodus der Druckwechseladsorptionseinheit eingeleitet wird, bevor der Anlaufmodus des katalytischen Kohlenwasserstoff-Reformers eingeleitet wird.

7. Verfahren nach einem der vorhergehenden Ansprüche, wobei kein Teil des Reformats (12') der Anlaufqualität in irgendwelche der mehreren Adsorptionsbetten (55) eingeleitet wird, und/oder wobei der Brennstoff (19') des Anlaufmodus kein Nebenproduktgas (65) von der Druckwechseladsorptionseinheit (50) umfasst.

8. Verfahren nach einem der vorhergehenden Ansprüche, wobei das H₂ zur Spülung der mehreren Adsorptionsbetten bei dem Anlaufmodus von einer H₂-Leitung bereitgestellt wird.

9. Verfahren nach einem der vorhergehenden Ansprüche, wobei das Reformat (12') der Anlaufqualität belüftet und/oder abgeflammt und/oder dazu benutzt wird, um wenigstens einen Teil des Brennstoffs (19') des Anlaufmodus zu bilden.

10. Verfahren nach einem der vorhergehenden Ansprüche, wobei bei dem Anlaufmodus des katalytischen Dampf-Kohlenwasserstoff-Reformers ein N₂- und dampfhaltiger Zustrom (16) eingeführt wird, während die mehreren katalysatorhaltigen Reformerrohre (15) aufgeheizt werden, bevor die Reformer-Zuführungsgasmischung (11') des Anlaufmodus in die mehreren katalysatorhaltigen Reformerrohre (15) eingeleitet wird.

11. Verfahren nach einem der vorhergehenden Ansprüche, wobei, nachdem die Einführung der Reformer-Zuführungsgasmischung (11) in die mehreren katalysatorhaltigen Reformerrohre (15) bei dem Abschaltmodus des katalytischen Dampf-Kohlenwasserstoff-Reformers abgebrochen wird, bei dem Abschaltmodus des katalytischen Dampf-Kohlenwasserstoff-Reformers die mehreren katalysatorhaltigen Reformerrohre (15) mit N₂ und/oder Dampfgespült werden, um die Gesamtkonzentration der brennbaren Gase auf weniger als 1 Vol.-% herabzusetzen.

12. Verfahren nach einem der vorhergehenden Ansprüche, wobei wenigstens eines der mehreren Adsorptionsbetten (55) den Herstellungsschritt nach dem Wiederanlauf beginnt, wenigstens eines der mehreren Adsorptionsbetten (55) den Druckentlastungsausgleichsschritt nach dem Wiederanlauf beginnt, wenigstens eines der mehreren Adsorptionsbetten (55) den Abschlämmungsschritt nach dem Wiederanlauf beginnt, wenigstens eines der mehreren Adsorptionsbetten (55) den Druckaufbauausgleichsschritt nach dem Wiederanlauf beginnt, und wenigstens eines der mehreren Adsorptionsbetten (55) den Druckaufbauschritt nach dem Wiederanlauf beginnt.

13. Verfahren nach einem der vorhergehenden Ansprüche, das ferner Folgendes umfasst:
einen zweiten Herstellungszustand des katalytischen Dampf-Kohlenwasserstoff-Reformers, bei dem eine Reformer-Zuführungsgasmischung (111) des zweiten Zustands in die mehreren katalysatorhaltigen Reformerrohre (15) eingeführt wird, bei dem die Reformer-Zuführungsgasmischung (111) des zweiten Zustands unter Reaktionsbedingungen reagiert wird, die zur Bildung eines H₂, CO, CH₄ und H₂O umfassenden Reformats (112) des zweiten Zustands wirksam sind, und bei dem das Reformat (112) des zweiten Zustands aus den mehreren katalysatorhaltigen Reformerrohren (15) entzogen und ein Brennstoff (119) des zweiten Zustands mit einem oxidierenden Gas (114) des zweiten Zustands in dem Reformerofen (25) außerhalb der mehreren katalysatorhaltigen Reformerrohre (15) verbrannt wird, wobei der Brennstoff (119) des zweiten Zustands ein Nebenproduktgas (165) des zweiten Zustands von der Druckwechseladsorptionseinheit (50) umfasst, und
einen zweiten Herstellungszustand der Druckwechseladsorptionseinheit, bei dem die Druckwechseladsorptionseinheit (50) ein Druckwechseladsorptionseinheits-Zuführungsgas (151) des zweiten Zustands, das aus wenigstens einem Teil des Reformats (112) des zweiten Zustands gebildet wird, das aus den mehreren katalysatorhaltigen Reformerrohren (15) des katalytischen Dampf-Kohlenwasserstoff-Reformers (10) entzogen wurde, der sich im zweiten Herstellungszustand des katalytischen Dampf-Kohlenwasserstoff-Reformers befindet, trennt, um das H₂-haltige Produkt (60) und das Nebenproduktgas (165) des zweiten Zustands herzustellen.

14. Verfahren nach einem der vorhergehenden Ansprüche, wobei bei dem Anlaufmodus der Druckwechseladsorptionseinheit ferner eine oder mehrere Sammlerleitungen (57, 58, 59), die operativ mit den mehreren Adsorptionsbetten (55) verbunden ist/sind, mit N₂ (95) gespült wird/werden, um in der einen oder den mehreren Sammlerleitungen (57, 58, 59) die O₂-Konzentration auf weniger als 1,3 Vol.-% O₂, vorzugsweise weniger als 0,5 Vol.-% O₂ herabzusetzen, und die eine oder mehreren Sammlerleitungen (57, 58, 59) anschließend mit H₂ (85) gespült wird/werden, um in jeder der einen oder mehreren Sammlerleitungen (57, 58, 59) eine H₂-Konzentration größer als 85 Vol.-% H₂, bevorzugt größer als 99 Vol.-% H₂ bereitzustellen, und bei dem ein Druck des in jeder der einen oder mehreren Sammlerleitungen vorkommenden H₂ innerhalb eines jeweiligen definierten Zieldruckbereichs für jede der einen oder mehreren Sammlerleitungen (57, 58, 59) eingestellt wird.

15. Verfahren nach einem der vorhergehenden Ansprüche, das ferner einen Instandhaltungszustand des katalytischen Dampf-Kohlenwasserstoff-Reformers umfasst, bei dem Luft in die mehreren katalysatorhaltigen Reformerrohre (15) eingeleitet wird und wenigstens ein Teil des N₂ in den mehreren katalysatorhaltigen Reformerrohren (15), das bei dem Abschaltmodus des katalytischen Dampf-Kohlenwasserstoff-Reformers eingeleitet wurde, aus den mehreren katalysatorhaltigen Reformerrohren entkommt.

## Revendications

1. Procédé pour la production d'un produit contenant du H₂ (60) dans un site de production d'hydrogène (1) comprenant un reformeur catalytique à la vapeur d'hydrocarbures (10) et une unité d'adsorption modulée en pression (50), le reformeur catalytique à la vapeur d'hydrocarbures (10) comprenant une pluralité de tubes de reformeur contenant un catalyseur (15) dans un four de reformage (25) et l'unité d'adsorption modulée en pression (50) comprenant une pluralité de lits d'adsorption (55), le procédé comprenant :
un état de production de reformeur catalytique à la vapeur d'hydrocarbures dans lequel un mélange de gaz d'alimentation de reformeur (11) est introduit dans la pluralité de tubes de reformeur contenant un catalyseur (15), le mélange de gaz d'alimentation de reformeur (11) est mis à réagir dans une réaction de reformage dans des conditions de réaction efficaces pour former un reformat (12) comprenant du H₂, du CO, du CH₄ et du H₂O, et le reformat (12) est retiré de la pluralité de tubes de reformeur contenant un catalyseur (15), et un combustible (19) est brûlé avec un gaz oxydant (14) dans le four de reformage (25) extérieur à la pluralité de tubes contenant un catalyseur (15) dans lequel le combustible (19) comprend au moins une partie d'un sous-produit gazeux (65) provenant de l'unité d'adsorption modulée en pression (50) ;
un état de production d'unité d'adsorption modulée en pression dans lequel l'unité d'adsorption modulée en pression (50) sépare un gaz d'alimentation d'unité d'adsorption modulée en pression (51) formé à partir d'au moins une partie du reformat (12) retiré de la pluralité de tubes de reformeur contenant un catalyseur (15) du reformeur catalytique à la vapeur d'hydrocarbures (10) soumis à l'état de production de reformeur catalytique à la vapeur d'hydrocarbures pour produire le produit contenant du H₂ (60) et le sous-produit gazeux (65), dans lequel chacun de la pluralité de lits d'adsorption (55) est soumis à un cycle répété d'étapes, le cycle répété d'étapes comprenant une étape de production, une étape d'égalisation par dépressurisation, une étape de purge, une étape d'égalisation par mise sous pression, et une étape de mise sous pression ;
un mode coupure du reformeur catalytique à la vapeur d'hydrocarbures comprenant l'interruption de l'introduction du mélange de gaz d'alimentation du reformeur (11) dans la pluralité de tubes contenant un catalyseur (15) et l'interruption de la combustion du combustible (19) avec le gaz oxydant (14), dans lequel le mode coupure du reformeur catalytique à la vapeur d'hydrocarbures fait suite à l'état de production du reformeur catalytique à la vapeur d'hydrocarbures ;
un mode coupure de l'unité d'adsorption modulée en pression comprenant l'interruption de l'introduction du gaz d'alimentation de l'unité d'adsorption modulée en pression (51) dans la pluralité de lits d'adsorption (55) en raison de l'entrée du reformeur catalytique à la vapeur d'hydrocarbures (10) dans le mode coupure de reformeur catalytique à la vapeur d'hydrocarbures, puis la purge de la pluralité de lits d'adsorption (55), dans lequel le mode coupure de l'unité d'adsorption modulée en pression se produit après l'état de production de l'unité d'adsorption modulée en pression ;
un mode démarrage d'unité d'adsorption modulée en pression comprenant la purge de la pluralité de lits d'adsorption (55) avec du H₂ (85) pour fournir une concentration en H₂ dans chacun de la pluralité de lits d'adsorption (55) supérieure à 85 % en volume de H₂, ou supérieure à 95 % en volume de H₂, de préférence supérieure à 99 % en volume de H₂ et l'ajustement d'une pression du H₂ à l'intérieur de chacun de la pluralité de lits d'adsorption (55) jusqu'à être comprise dans une plage de pression cible définie respective pour chacun de la pluralité de lits d'adsorption (55) ; et
un mode démarrage de reformeur catalytique à la vapeur d'hydrocarbures comprenant l'introduction d'un mélange de gaz d'alimentation de reformeur en mode démarrage (11') dans la pluralité de tubes de reformeur contenant un catalyseur (15), la réaction du mélange de gaz d'alimentation de reformeur en mode démarrage dans des conditions de réaction efficaces pour former un reformat de qualité démarrage (12') comprenant du H₂, du CO, du CH₄, et du H₂O, et le retrait du reformat de qualité démarrage (12') de la pluralité de tubes de reformeur contenant un catalyseur (15), et la combustion du combustible en mode démarrage (19') avec un gaz oxydant en mode démarrage (14') dans le four de reformage (25) extérieur à la pluralité de tubes contenant un catalyseur (15) ;
dans lequel au moins une partie du mode démarrage d'adsorption modulée en pression est simultanée à au moins une partie du mode démarrage de reformeur catalytique à la vapeur d'hydrocarbures ;
**caractérisé en ce que**
dans le mode coupure de reformeur catalytique à la vapeur d'hydrocarbures, la pluralité de lits d'adsorption (55) sont purgés avec du N₂ (95) pour fournir une concentration en N₂ dans chacun de la pluralité de lits d'adsorption (55) supérieure à 96 % en volume de N₂, ou supérieure à 99,6 % en volume de N₂ ;
le procédé comprend un état de maintenance d'unité d'adsorption modulée en pression dans lequel le cycle répété d'étapes est suspendu et dans lequel de l'air est introduit dans la pluralité de lits d'adsorption (55) et au moins une partie du N₂ dans la pluralité de lits d'adsorption (55) qui a été introduit pendant le mode coupure d'adsorption modulée en pression s'échappe de la pluralité de lits d'adsorption (55) ; et
le mode démarrage d'unité d'adsorption modulée en pression comprend la purge de la pluralité de lits d'adsorption (55) avec du N₂ (95) pour réduire la concentration en O₂ dans chacun de la pluralité de lits d'adsorption (55) à moins de 1,3 % en volume d'O₂, de préférence moins d'environ 0,5 % en volume d'O₂, puis la purge de la pluralité de lits d'adsorption avec du H₂ (85),
dans lequel la plage de pression cible définie respective à laquelle la pression du H₂ à l'intérieur de chacun de la pluralité de lits d'adsorption (55) est ajustée dans le mode démarrage d'unité d'adsorption modulée en pression est définie par l'étape à laquelle chaque lit d'adsorption sera d'abord soumis lors du redémarrage du cycle répété d'étapes, dans lequel le mode démarrage d'unité d'adsorption modulée en pression fait suite à l'état de maintenance d'unité d'adsorption modulée en pression.

2. Procédé selon la revendication 1, dans lequel pendant le mode démarrage d'unité d'adsorption modulée en pression, la pluralité de lits d'adsorption (55) sont purgés avec du H₂ (85) indépendamment de l'un quelconque de la pluralité de lits d'adsorption (85) soumis à une quelconque étape du cycle répété d'étapes et/ou la pression du H₂ à l'intérieur de chacun de la pluralité de lits d'adsorption (55) est ajustée pour être comprise dans la plage de pression cible définie respective pour chacun de la pluralité de lits d'adsorption (55) indépendamment de l'un quelconque de la pluralité de lits d'adsorption (85) soumis à une quelconque étape du cycle répété d'étapes.

3. Procédé selon la revendication 1 ou la revendication 2, dans lequel pendant le mode démarrage d'unité d'adsorption modulée en pression, le cycle répété d'étapes est toujours suspendu.

4. Procédé selon la revendication 3, dans lequel pendant le mode démarrage d'unité d'adsorption modulée en pression, la pluralité de lits d'adsorption (55) sont purgés avec du H₂ (85) et/ou la pression du H₂ à l'intérieur de chacun de la pluralité de lits d'adsorption (55) est ajustée avant de les soumettre à une quelconque étape du cycle répété d'étapes.

5. Procédé selon l'une quelconque des revendications précédentes, comprenant en outre le redémarrage du cycle répété d'étapes suite à l'achèvement du mode démarrage d'unité d'adsorption modulée en pression.

6. Procédé selon l'une quelconque des revendications précédentes, dans lequel le mode démarrage d'adsorption modulée en pression est déclenché avant le déclenchement du mode démarrage de reformeur catalytique à la vapeur d'hydrocarbures.

7. Procédé selon l'une quelconque des revendications précédentes, dans lequel aucune partie du reformat de qualité démarrage (12') n'est introduite dans l'un quelconque de la pluralité de lits d'adsorption (55) et/ou dans lequel le combustible de mode démarrage (19') ne comprend pas de sous-produits gazeux (65) provenant de l'unité d'adsorption modulée en pression (55).

8. Procédé selon l'une quelconque des revendications précédentes, dans lequel le H₂ pour la purge de la pluralité de lits d'adsorption pendant le mode démarrage est fourni à partir d'une conduite de H₂.

9. Procédé selon l'une quelconque des revendications précédentes, dans lequel le reformat de qualité démarrage (12') est l'un parmi rejeté à l'air libre (67), brûlé à la torche, ou utilisé pour former au moins une partie du combustible de mode démarrage (19').

10. Procédé selon l'une quelconque des revendications précédentes, dans lequel le mode démarrage du reformeur catalytique à la vapeur d'hydrocarbures comprend l'introduction d'un flux contenant du N₂ et de la vapeur (16) pendant le chauffage de la pluralité de tubes de reformeur contenant un catalyseur (15) avant l'introduction du mélange de gaz d'alimentation du reformeur de mode démarrage (11') dans la pluralité de tubes de reformeur contenant un catalyseur (15).

11. Procédé selon l'une quelconque des revendications précédentes, dans lequel après l'interruption de l'introduction du mélange de gaz d'alimentation du reformeur (11) dans la pluralité de tubes contenant un catalyseur (15) dans le mode coupure de reformeur catalytique à la vapeur d'hydrocarbures, le mode coupure de reformeur catalytique à la vapeur d'hydrocarbures comprend la purge de la pluralité de tubes de reformeur contenant un catalyseur (15) avec du N₂ et/ou de la vapeur pour réduire la concentration totale en gaz combustible à moins de 1 % en volume.

12. Procédé selon l'une quelconque des revendications précédentes, dans lequel au moins l'un de la pluralité de lits d'adsorption (55) débute l'étape de production lors du redémarrage, au moins l'un de la pluralité de lits d'adsorption (55) débute l'étape d'égalisation par dépressurisation lors du redémarrage, au moins l'un de la pluralité de lits d'adsorption (55) débute l'étape de purge lors du redémarrage, au moins l'un de la pluralité de lits d'adsorption (55) débute l'étape d'égalisation par mise sous pression lors du redémarrage, et au moins l'un de la pluralité de lits d'adsorption (55) débute l'étape de mise sous pression lors du redémarrage.

13. Procédé selon l'une quelconque des revendications précédentes, comprenant en outre :
un second état de production du reformeur catalytique à la vapeur d'hydrocarbures dans lequel un mélange de gaz alimentation du reformeur du second état (111) est introduit dans la pluralité de tubes de reformeur contenant un catalyseur (15), le mélange de gaz alimentation du reformeur du second état (111) est mis à réagir dans des conditions de réaction efficaces pour former un reformat de second état (112) comprenant du H₂, du CO, du CH₄ et du H₂O, et le reformat de second état (112) est retiré de la pluralité de tubes de reformeur contenant un catalyseur (15), et un combustible de second état (119) est brûlé avec un gaz oxydant de second état (114) dans le four de reformage (25) extérieur à la pluralité de tubes contenant un catalyseur (15) dans lequel le combustible de second état (119) comprend au moins une partie d'un sous-produit gazeux de second état (165) provenant de l'unité d'adsorption modulée en pression (50) ; et
un second état de production d'unité d'adsorption modulée en pression dans lequel l'unité d'adsorption modulée en pression (50) sépare un gaz d'alimentation d'unité d'adsorption modulée en pression de second état (151) formé à partir d'au moins une partie du reformat de second état (112) retiré de la pluralité de tubes de reformeur contenant un catalyseur (15) du reformeur catalytique à la vapeur d'hydrocarbures (10) soumis au second état de production de reformeur catalytique à la vapeur d'hydrocarbures pour produire un produit contenant du H₂ (60) et le sous-produit gazeux de second état (165).

14. Procédé selon l'une quelconque des revendications précédentes, dans lequel le mode démarrage d'unité d'adsorption modulée en pression comprend en outre la purge d'un ou plusieurs collecteurs de tuyau (57, 58, 59) connectés opérationnellement à la pluralité de lits d'adsorption (55) avec du N₂ (95) pour réduire la concentration en O₂ dans les un ou plusieurs collecteurs de tuyau (57, 58, 59) à moins de 1,3 % en volume d'O₂, de préférence moins de 0,5 % en volume d'O₂, puis la purge des un ou plusieurs collecteurs de tuyau (57, 58, 59) avec du H₂ (85) pour fournir une concentration en H₂ dans chacun des un ou plusieurs collecteurs de tuyau supérieure à 85 % en volume de H₂, de préférence supérieure à 99 % en volume de H₂, et l'ajustement d'une pression du H₂ à l'intérieur de chacun des un ou plusieurs collecteurs de tuyau pour qu'elle soit comprise dans une plage de pression cible définie respective pour chacun des un ou plusieurs collecteurs de tuyau (57, 58, 59).

15. Procédé selon l'une quelconque des revendications précédentes, comprenant en outre un état de maintenance de reformeur catalytique à la vapeur d'hydrocarbures dans lequel de l'air est introduit dans la pluralité de tubes de reformeur contenant un catalyseur et au moins une partie du N₂ dans la pluralité de tubes de reformeur contenant un catalyseur qui a été introduit pendant le mode coupure de reformeur catalytique à la vapeur d'hydrocarbures s'échappe de la pluralité de tubes de reformeur contenant un catalyseur.
